(19) **Europäisches Patentamt / European Patent Office / Office européen des brevets**

(11) **EP 4 742 650 A1**

(12) **EUROPEAN PATENT APPLICATION**
published in accordance with Art. 153(4) EPC

(43) Date of publication:
**13.05.2026 Bulletin 2026/20**

(21) Application number: **24885978.7**

(22) Date of filing: **12.08.2024**

(51) International Patent Classification (IPC):
*H04N 9/31* (2006.01)

(52) Cooperative Patent Classification (CPC):
**H04N 9/31**

(86) International application number:
**PCT/KR2024/012008**

(87) International publication number:
**WO 2025/095298 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.11.2023 KR 20230149207**

(71) Applicant: **Samsung Electronics Co., Ltd.**
**Suwon-si, Gyeonggi-do 16677 (KR)**

(72) Inventors:
• **KANG, Giuk**
**Suwon-si, Gyeonggi-do 16677 (KR)**
• **LEE, Byunghwa**
**Suwon-si, Gyeonggi-do 16677 (KR)**
• **NOH, Jeewoo**
**Suwon-si, Gyeonggi-do 16677 (KR)**
• **SHIM, Sojeong**
**Suwon-si, Gyeonggi-do 16677 (KR)**
• **CHOI, Yeeun**
**Suwon-si, Gyeonggi-do 16677 (KR)**
• **CHOI, Inyoung**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **ELECTRONIC DEVICE FOR MAINTAINING AREA IN WHICH CONTENT IS DISPLAYED ON PROJECTION SURFACE, AND CONTROL METHOD THEREOF**

(57) An electronic device is disclosed. This electronic device comprises: a projection unit; a driving unit; a memory for storing at least one computer program; and at least one processor communicatively connected to the projection unit, the driving unit, and the memory, wherein the at least one computer program includes computer-executable instructions individually or collectively executed by the at least one processor, to cause the electronic device to: control the projection unit to project first content on a projection surface; identify, if the electronic device moves from a first position to a second position, a projection angle for the projection surface on the basis of the second position; obtain second content obtained by changing the screen shape of the first content, on the basis of the second position and the projection angle; and if the driving unit is controlled such that the electronic device moves from the first position to the second position, control the projection unit to project the second content on the projection surface.

FIG. 1

EP 4 742 650 A1

**Description**

BACKGROUND

**1. Field**

The disclosure relates to an electronic apparatus and a controlling method. More particularly, the disclosure relates to an electronic apparatus that maintains an area on which content is displayed on a projection surface and a controlling method thereof.

**2. Description of Related Art**

With the development of electronic technology, electronic apparatuses that provide various functions have been developed. In particular, projectors capable of projecting content while moving around have been developed in recent years.

However, when a project is moving while projecting content, the size and shape of the content screen changes as the projection position changes, disrupting the user's sense of immersion and forcing the user to stop watching and adjust the content screen.

The above information is presented as background information only to assist with an understanding of the disclosure. No determination has been made, and no assertion is made, as to whether any of the above might be applicable as prior art with regard to the disclosure.

SUMMARY

Aspects of the disclosure are to address at least the above-mentioned problems and/or disadvantages and to provide at least the advantages described below. Accordingly, an aspect of the disclosure is to provide an electronic apparatus and a controlling method.

Additional aspects will be set forth in part in the description which follows and, in part, will be apparent from the description, or may be learned by practice of the presented embodiments.

In accordance with an aspect of a disclosure, an electronic apparatus is provided. The electronic apparatus includes a projector, a driver, memory storing one or more computer programs, and one or more processors communicatively coupled to the projector, the driver and the memory, wherein one or more computer programs include computer-executable instructions that, when executed by he one or more processors individually or collectively, cause the electronic apparatus to control the projector to project first content onto a projection surface, based on the electronic apparatus moving from a first position to a second position, identify a projection angle for the projection surface based on the second position, obtain second content by changing a screen form of the first content based on the second position and the projection angle, and based on the electronic apparatus moving from the first position to the second position by controlling the driver, control the projector to project the second content onto the projection surface.

The one or more computer programs further include computer-executable instructions that, when executed by the one or more processors individually or collectively, cause the electronic apparatus to identify an edge corresponding to a direction of movement of the electronic apparatus among a left edge and a right edge of a projection area onto which the first content is projected on the projection surface, and identify the second position based on the identified edge.

The apparatus further includes a sensor, and the one or more computer programs further include computer-executable instructions that, when executed by the one or more processors individually or collectively, cause the electronic apparatus to identify a distance from the first position to the projection surface through the sensor, identify a distance from the first position to the identified edge based on a radial angle of the projector, and identify the second position based on the identified distance.

The distance from the second position to the identified edge is equal to or greater than a distance from the first position to the identified edge.

The projection angle includes an azimuth at the second position and an elevation angle at the second position, and the one or more computer programs further include computer-executable instructions that, when executed by the one or more processors individually or collectively, cause the electronic apparatus to identify an azimuth at the second position based on a distance from the first position to the projection surface, a distance from the first position to the second position, and a direction of movement of the electronic apparatus, and identify an elevation angle at the second position based on a distance from the first position to the projection surface, an elevation angle at the first position, and an azimuth at the second position.

The one or more computer programs further include computer-executable instructions that, when executed by the one or more processors individually or collectively, cause the electronic apparatus to scale the second content based on a distance from the first position to the projection surface, a distance from the first position to the second position, a radial angle of the projector, and an azimuth at the second position.

The driver includes a first driver configured to move the electronic apparatus, and a second driver configured to control a projection direction of the projector, and the one or more computer programs further include computer-executable instructions that, when executed by the one or more processors individually or collectively, cause the electronic apparatus to control the first driver to move the electronic apparatus from the first position to the second position, and based on the electronic apparatus being located in the second position, control the second driver so that the projector projects the second content based on the projection angle.

The one or more computer programs further include computer-executable instructions that, when executed by the one or more processors individually or collectively, cause the electronic apparatus to identify a plurality of third positions in a path from the first position to the second position, and perform an operation of identifying the projection angle, an operation of changing the screen form, and the projection operation at each of the plurality of third positions.

The one or more computer programs further include computer-executable instructions that, when executed by the one or more processors individually or collectively, cause the electronic apparatus to identify that the electronic apparatus is moving from the first position to the second position based on at least one of a charging state of the electronic apparatus, a temperature of the electronic apparatus, a type of the first content, a number of users around the electronic apparatus, or positions of the users.

The projector includes a first projector and a second projector, and the one or more computer programs further include computer-executable instructions that, when executed by the one or more processors individually or collectively, cause the electronic apparatus to control the first projector to project the first content onto the projection surface, and control the second projector to project third content onto another projection surface.

The third content includes a control screen for controlling the first content, and the one or more computer programs further include computer-executable instructions that, when executed by the one or more processors individually or collectively, cause the electronic apparatus to identify the second position so that the control screen is provided in front of a user.

An area corresponding to the first content on the projection surface overlaps with an area corresponding to the second content by less than a preset error.

In accordance with another aspect of the disclosure, a method performed by an electronic apparatus is provided. The method includes projecting, by the electronic apparatus, first content onto a projection surface, based on the electronic apparatus moving from a first position to a second position, identifying, by the electronic apparatus, a projection angle for the projection surface based on the second position, obtaining, by the electronic apparatus, second content by changing a screen form of the first content based on the second position and the projection angle, and based on the electronic apparatus moving from the first position to the second position by controlling a driver, projecting, by the electronic apparatus, the second content onto the projection surface.

The method further includes identifying an edge corresponding to a direction of movement of the electronic apparatus among a left edge and a right edge of a projection area onto which the first content is projected on the projection surface, and identifying the second position based on the identified edge.

The identifying the second position includes identifying a distance from the first position to the projection surface, identifying a distance from the first position to the identified edge based on a radial angle of the projector included in the electronic apparatus, and identifying the second position based on the identified distance.

The distance from the second position to the identified edge is equal to or greater than a distance from the first position to the identified edge.

The projection angle includes an azimuth at the second position and an elevation angle at the second position, and the identifying a projection angle may include identify an azimuth at the second position based on a distance from the first position to the projection surface, a distance from the first position to the second position, and a direction of movement of the electronic apparatus, and identifying an elevation angle at the second position based on a distance from the first position to the projection surface, an elevation angle at the first position, and an azimuth at the second position.

The obtaining includes scaling the second content based on a distance from the first position to the projection surface, a distance from the first position to the second position, a radial angle of the projector, and an azimuth at the second position.

The method further includes identifying a plurality of third positions in a path from the first position to the second position, and performing an operation of identifying the projection angle, an operation of changing the screen form, and the projection operation at each of the plurality of third positions.

The method further includes identifying that the electronic apparatus is moving from the first position to the second position based on at least one of a charging state of the electronic apparatus, a temperature of the electronic apparatus, a type of the first content, a number of users around the electronic apparatus, or positions of the users.

The projecting the first content includes controlling the first projector included in the electronic apparatus to project the first content onto the projection surface, and controlling the second projector included in the electronic apparatus to project third content onto another projection surface.

The third content includes a control screen for controlling the first content, and the method may further include identifying the second position so that the control screen is provided in front of a user.

An area corresponding to the first content on the projection surface overlaps with an area corresponding to the second content by less than a preset error.

**In** accordance with another aspect of the disclosure, one or more non-transitory computer-readable storage media storing one or more computer programs including computer-executable instructions that, when executed by one or more processors of an electronic apparatus individually or collectively, cause the electronic apparatus to perform operations are provided. The operations including projecting, by the electronic apparatus, first content onto a projection surface, based on the electronic apparatus moving from a first position to a second position, identifying, by the electronic apparatus, a projection angle for the projection surface based on the second position, obtaining, by the electronic apparatus, second content by changing a screen form of the first content based on the second position and the projection angle, and based on the electronic apparatus moving from the first position to the second position by controlling a driver, projecting, by the electronic apparatus, the second content onto the projection surface.

Other aspects, advantages, and salient features of the disclosure will become apparent to those skilled in the art from the following detailed description, which, taken in conjunction with the annexed drawings, discloses various embodiments of the disclosure.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a block diagram illustrating configuration of an electronic apparatus according to an embodiment of the disclosure;

FIG. 2 is a block diagram illustrating detailed configuration of an electronic apparatus according to an embodiment of the disclosure;

FIGS. 3 and 4 are views provided to schematically explain an operation of an electronic apparatus according to various embodiments of the disclosure;

FIG. 5 is a flowchart provided to explain a structure of an electronic apparatus according to an embodiment of the disclosure;

FIG. 6 is a flowchart provided to explain an operation of an electronic apparatus according to an embodiment of the disclosure;

FIGS. 7, 8, and 9 are views provided to explain an operation of identifying a position to move to and a projection angle according to various embodiments of the disclosure;

FIGS. 10, 11, 12, 13, and 14 are views provided to explain an operation of changing a screen form of first content according to various embodiments of the disclosure;

FIGS. 15, 16, 17, 18, 19, 20, 21, 22, 23, and 24 are views provided to explain a cause of movement according to various embodiments of the disclosure;

FIG. 25 is a view provided to explain a case where an obstacle is identified during a movement according to an embodiment of the disclosure; and

FIG. 26 is a flowchart provided to explain a controlling method of an electronic apparatus according to an embodiment of the disclosure.

The same reference numerals are used to represent the same elements throughout the drawings.

DETAILED DESCRIPTION

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The disclosure is to provide an electronic apparatus that maintains the size and shape of a content screen even when the content is projected while the electronic apparatus is moving and a controlling method thereof.

General terms that are currently widely used are selected as the terms used in embodiments of the disclosure in consideration of their functions in the disclosure, and may be changed based on the intention of those skilled in the art or a judicial precedent, the emergence of a new technique, or the like. In addition, in a specific case, terms arbitrarily chosen by an applicant may exist. In this case, the meanings of such terms are mentioned in detail in corresponding descriptions of the disclosure. Therefore, the terms used in the embodiments of the disclosure need to be defined on the basis of the meanings of the terms and the contents throughout the disclosure rather than simple names of the terms.

In the disclosure, an expression "have", "may have", "include", "may include" or the like, indicates the existence of a corresponding feature (e.g., a numerical value, a function, an operation or a component such as a part), and does not exclude the existence of an additional feature.

An expression, "at least one of A or/and B" should be understood as indicating any one of "A", "B" and "both of A and B."

Expressions "1st", "2nd", "first", "second", and the like, used in the disclosure may indicate various components regardless of the sequence and/or importance of the components. These expressions are used only to distinguish one component from another component, and do not limit the corresponding components.

It is to be understood that a term "include", "formed of", or the like used in the application specifies the presence of features, numerals, steps, operations, components, parts, or combinations thereof, mentioned in the specification, and does not preclude the presence or addition of one or more other features, numerals, steps, operations, components, parts, or combinations thereof.

In the disclosure, a term 'user' may refer to a person using an electronic apparatus or a device using an electronic apparatus (e.g., an artificial intelligence electronic apparatus)..

It should be appreciated that the blocks in each flowchart and combinations of the flowcharts may be performed by one or more computer programs which include instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g. a central processing unit (CPU)), a communication processor (CP, e.g., a modem), a graphics processing unit (GPU), a neural processing unit (NPU) (e.g., an artificial intelligence (AI) chip), a Wi-Fi chip, a Bluetooth® chip, a global positioning system (GPS) chip, a near field communication (NFC) chip, connectivity chips, a sensor controller, a touch controller, a finger-print sensor controller, a display driver integrated circuit (IC), an audio CODEC chip, a universal serial bus (USB) controller, a camera controller, an image processing IC, a microprocessor unit (MPU), a system on chip (SoC), an IC, or the like.

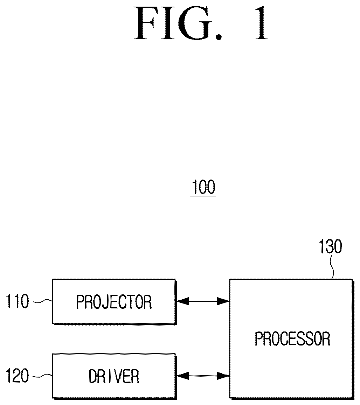

FIG. 1 is a block diagram illustrating configuration of an electronic apparatus 100 according to an embodiment of the disclosure.

The electronic apparatus 100 may be a device that projects content while changing its position. For example, the electronic apparatus 100 is a projector that is capable of self-moving.

The electronic apparatus 100 may be a device for imaging content and projecting the imaged content while changing the position of the electronic apparatus 100. For example, the electronic apparatus 100 is a device that performs image-processing on content based on the changed position of the electronic apparatus 100 and projects the image-processed content to maintain an area where the content is projected on a projection surface consistently.

Referring to FIG. 1, the electronic apparatus 100 includes a projector 110, a driver 120, and a processor 130.

The projector 110 may project content onto a projection surface. Specifically, the projector 110 may project an image or a video including at least one of content received from a source device or pre-stored content onto the projection area using a lamp or light emitting diode (LED).

The driver 120 may include a first driver for moving the electronic apparatus 100 under the control of the processor 130. For example, the driver 120 includes a wheel, a motor, or the like for moving the electronic apparatus 100. However, the driver 120 is not limited thereto, and the driver 120 may be any configuration capable of moving the position of the electronic apparatus 100.

The driver 120 may include a second driver for controlling a projection direction of the projector 110 under control of the processor 130. For example, the driver 120 includes a motor or the like for controlling the projection direction of the projector 110. However, the driver 120 is not limited thereto, and the driver 120 may be any configuration capable of controlling the projection direction of the projector 110.

The processor 130 controls the overall operations of the electronic apparatus 100. Specifically, the processor 130 may be connected to each configuration of the electronic apparatus 100 to control the overall operations of the electronic apparatus 100. For example, the processor 130 is connected to configurations such as the projector 110, the driver 120, a sensor (not shown), a communication interface (not shown), and the like to control the operations of the electronic apparatus 100.

The one or more processors 130 may include one or more of a central processing unit (CPU), a graphics processing unit (GPU), an accelerated processing unit (APU), a many integrated core (MIC), a neural processing unit (NPU), a hardware accelerator, or a machine learning accelerator. The one or more processors 130 may control one or any combination of the other components of the electronic apparatus 100, and may perform communication-related operations or data processing. The one or more processors 130 may execute one or more programs or instructions stored in memory. For example, the one or more processors 130 performs a method according to an embodiment by executing one or more instructions stored in the memory.

When a method according to an embodiment includes a plurality of operations, the plurality of operations may be performed by one processor or by a plurality of processors. In other words, when a first operation, a second operation, and a third operation are performed by the method according to an embodiment, all of the first operation, the second operation, and the third operation may be performed by the first processor, or the first operation and the second operation may be performed by the first processor (e.g., a general-purpose processor) and the third operation may be performed by the second processor (e.g., an artificial intelligence-dedicated processor).

The one or more processors 130 may be implemented as a single core processor comprising a single core, or as one or more multicore processors including a plurality of cores (e.g., homogeneous multicore or heterogeneous multicore). When the one or more processors are implemented as multicore processors, each of the plurality of cores included in a multicore processor may include a processor internal memory, such as cache memory and on-chip memory, and a common cache shared by the plurality of cores may be included in the multicore processor. Further, each of the plurality of cores (or some of the plurality of cores) included in the multi-core processor may independently read and perform program instructions to implement the method according to an embodiment, or all (or some) of the plurality of cores may be coupled to read and perform program instructions to implement the method according to an embodiment.

When a method according to an embodiment includes a plurality of operations, the plurality of operations may be performed by one core of a plurality of cores included in a multi-core processor, or may be performed by a plurality of cores. For example, when a first operation, a second operation, and a third operation are performed by a method according to an embodiment, all of the first operation, the second operation, and the third operation are performed by the first core included in the multi-core processor, or the first operation and the second operation may be performed by the first core included in the multi-core processor and the third operation may be performed by the second core included in the multi-core processor.

**In** the embodiments of the disclosure, the one or more processors 130 may mean a system-on-chip (SoC) in which one or more processors and other electronic components are integrated, a single-core processor, a multi-core processor, or a core included in a single-core processor or multi-core processor. The core may be implemented as CPU, GPU, APU, MIC, NPU, hardware accelerator, or machine learning accelerator, etc., but the core is not limited to the embodiments of the disclosure. However, hereinafter, for convenience of explanation, the operation of the electronic apparatus 100 will be described using the term 'processor 130.'

The processor 130 may control the projector 110 to project first content onto the projection surface.

While controlling the projector 110 to project the first content onto the projection surface, the processor 130 may identify that the electronic apparatus 100 is moving from a first position to a second position. For example, the processor 130 identifies that the electronic apparatus 100 is moving from the first position to the second position based on at least one of a charging state of the electronic apparatus 100, a temperature of the electronic apparatus 100, a type of the first content, a number of users in the vicinity of the electronic apparatus 100, or positions of the users. The second position may be expressed in absolute coordinates, but may also be expressed in relative coordinates to the current position of the electronic apparatus 100.

The processor 130 may identify an edge corresponding to a movement direction of the electronic apparatus 100 among a left edge and a right edge of a projection area where the first content is projected on the projection surface, and identify the second position based on the identified edge.

For example, the electronic apparatus 100 further includes a sensor, and the processor 130 may identify a distance from the first position to the projection surface through the sensor, identify a distance from the first position to the identified edge based on a radial angle of the projector 110, and identifies the second position based on the identified distance. For instance, the distance from the second position to the identified edge may be equal to or greater than the distance to the identified edge from the first position. Accordingly, the projection area where the content is projected can be maintained. When the distance from the second position to the identified edge is less than the distance from the first position to the identified edge, the projection area by the projector 110 may become smaller. In this case, the projection area where the content is projected becomes smaller, thereby decreasing the user's sense of immersion.

When the electronic apparatus 100 moves from the first position to the second position, the processor 130 may identify a projection angle for the projection surface based on the second position. For example, when the electronic apparatus 100 is moved to the right based on the projection direction, the projection direction needs to change counterclockwise to maintain the projection area where the content is projected.

The processor 130 may obtain the second content by changing the screen form of the first content based on the second position and the projection angle. For example, when the electronic apparatus 100 is moved to the right based on the projection direction, the processor 130 reduces the first content, but may process the left and right portions differently. For instance, the processor 130 may obtain the second content by changing the screen form of the first content so that the length of the left edge of the first content is shorter than the length of the right edge of the second content.

The projection angle includes an azimuth at the second position and an elevation angle at the second position, and the processor 130 may identify the azimuth at the second position based on the distance from the first position to the projection surface, the distance from the first position to the second position, and the movement direction of the electronic apparatus, and may identify the elevation angle at the second position based on the distance from the first position to the projection surface, the elevation angle at the first position, and the azimuth at the second position. The processor 130 may scale the second content based on the distance from the first position to the projection surface, the distance from the first position to the second position, the radial angle of the projector 110, and the azimuth at the second position.

The method for identifying the projection angle based on the second position and the method for changing the screen form of the first content will be described in detail with reference to the following drawings.

The driver 120 includes a first driver to move the electronic apparatus 100 and a second driver to control the projection direction of the projector 110, and the processor 130 may control the first driver to move the electronic apparatus 100 from the first position to the second position, and when the electronic apparatus 100 is in the second position, the processor 130 may control the second driver to cause the projector 110 to project the second content based on the projection angle.

When the electronic apparatus 100 moves from the first position to the second position by controlling the driver 120, the processor 130 may control the projector 110 to project the second content onto the projection surface.

Hereinabove, for convenience of explanation, only a case where the electronic apparatus 100 moves from the first position to the second position is described, but such an operation may be more continuous. For example, the processor 130 identifies a plurality of third positions on a path from the first position to the second position, and may perform the operation of identifying the projection angle, the operation of changing the screen form, and the projection operation at each of the plurality of third positions. In other words, the operation may be more continuous to maintain the user's sense of immersion. In this case, the area corresponding to the first content in the projection surface may overlap with the area corresponding to the second content in the projection surface by less than a preset error. In particular, the more the number of the third positions, the smaller the error.

Meanwhile, the projector 110 includes a first projector and a second projector, and the processor 130 may control the first projector to project the first content onto the projection surface, and may control the second projector to project the third content onto another projection surface. The third content includes a control screen for controlling the first content, and the processor 130 may identify the second position so that the control screen is provided in front of the user.

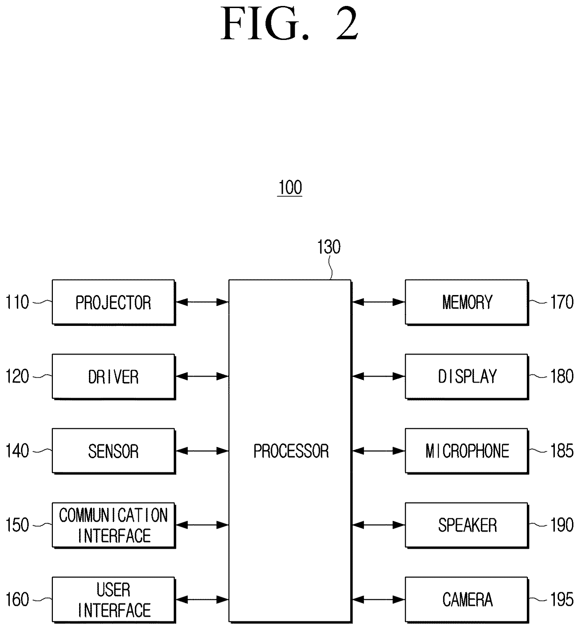

FIG. 2 is a block diagram illustrating detailed configuration of an electronic apparatus according to an embodiment of the disclosure.

Referring to FIG. 2, the electronic apparatus 100 may include the projector 110, the driver 120, and the processor 130. The electronic apparatus 100 may further include a sensor 140, a communication interface 150, a user interface 160, memory 170, a display 180, a microphone 185, a speaker 190, and a camera 195. The components shown in FIG. 2, which overlap with the components shown in FIG. 1 will not be described in detail.

The sensor 140 is a sensor for identifying the distance from the electronic apparatus 100 to the projection surface, and may be implemented as a time-of-flight (ToF) sensor. However, the sensor 140 may be any sensor capable of identifying the distance from the electronic apparatus 100 to the projection surface. In addition, the processor 130 may also identify the distance from the electronic apparatus 100 to the projection surface via the camera 195 which will be described later.

The communication interface 150 is configured to perform communication with various types of external devices according to various types of communication methods. For example, the electronic apparatus 100 performs communication with a content server or a user terminal device via the communication interface 150.

The communication interface 150 may include a wireless-fidelity (Wi-Fi) module, a Bluetooth module, an infrared communication module, a wireless communication module, and the like. Each communication module may be implemented in the form of at least one hardware chip.

The Wi-Fi module and the Bluetooth module perform communication using a Wi-Fi method and a Bluetooth method, respectively. When using a Wi-Fi module or a Bluetooth module, various connection information such as service set identifier (SSID) and session keys are first transmitted and received, and various information can be transmitted and received after establishing a communication connection using the same. The infrared communication module performs communication according to an infrared Data Association (IrDA) communication technology which transmits data wirelessly over a short distance using infrared rays between optical light and millimeter waves.

In addition to the above-described communication methods, the wireless communication module may include at least one communication chip that performs communication according to various wireless communication standards, such as Zigbee, 3rd Generation (3G), 3rd Generation Partnership Project (3GPP), Long Term Evolution (LTE), LTE Advanced (LTE-A), 4th Generation (4G), 5th Generation (5G), etc.

Alternatively, the communication interface 150 may include a wired communication interface such as high-definition media interface (HDMI), DP, Thunderbolt, USB, red green blue (RGB), D-SUB, digital visual interface (DVI), etc.

In addition, the communication interface 150 may include at least one of a local area network (LAN) module, an Ethernet module, or a wired communication module that performs communication using pair cables, coaxial cables, or fiber optic cables.

The user interface 160 may be implemented as a button, a touch pad, a mouse, a keyboard, etc., or may be implemented as a touch screen that can also perform a display function and a manipulation input function. The button may be a various types of buttons such as a mechanical button, a touch pad, a wheel, etc. formed in any arbitrary area of the exterior of the main body of the electronic apparatus 100, such as the front, side, or back.

The memory 170 may refer to hardware that stores information, such as data, in electrical or magnetic form for access by the processor 130 or the like. To this end, the memory 170 may be implemented as at least one of the following hardware: non-volatile memory, volatile memory, flash memory, hard disk drive (HDD) or solid state drive (SSD), random access memory (RAM), read only memory (ROM), etc.

The memory 170 may store at least one instruction or module required for the operation of the display apparatus (i.e., electronic apparatus 100) or the processor 130. The instruction is a code unit that directs the operation of the display apparatus (i.e., electronic apparatus 100) or processor 130, and may be written in a machine language that can be understood by a computer. Alternatively, the memory 170 may store a plurality of instructions that perform a specific task of the electronic apparatus 100 or the processor 130 as a set of instructions.

The memory 170 may store data, which is information in bits or bytes that may represent characters, numbers, images, and the like. For example, the memory 170 stores a projection angle identification module, an image processing module, etc.

The memory 170 is accessed by the processor 130, and reading/writing/modifying/deleting/updating instructions, modules, or data may be performed by the processor 130.

The display 180 is configured to display an image, which can be implemented as various types of displays, such as liquid crystal displays (LCDs), organic light emitting diodes (OLEDs) displays, plasma display panels (PDPs), and the like. The display 180 may also include drive circuitry, backlight units, and the like, which may be implemented in the form of a-si TFTs, low temperature poly silicon (LTPS) TFTs, organic TFTs (OTFTs), and the like. Meanwhile, the display 180 may be implemented as a touch screen combined with a touch sensor, a flexible display, a three-dimensional (3D) display, and the like.

The microphone 185 is configured to receive sound input and convert it into an audio signal. The microphone 185 is electrically connected to the processor 130, and may receive sound under the control of the processor 130.

For example, the microphone 185 is integrally formed in the direction of the top, front, side, etc. of the electronic apparatus 100. Alternatively, the microphone 185 may be formed on a remote controller, etc. that is separate from the electronic apparatus 100. In this case, the remote controller may receive sound through the microphone 185, and provide the received sound to the electronic apparatus 100.

The microphone 185 may include various components such as a microphone that collects analog sound, an amplification circuit that amplifies the collected sound, an A/D conversion circuit that samples the amplified sound and converts it into a digital signal, a filter circuit that removes noise components from the converted digital signal, etc.

Meanwhile, the microphone 185 may be implemented in the form of a sound sensor, and may be any configuration capable of collecting sound.

The speaker 190 is configured to output various notification sounds or voice messages as well as various audio data processed by the processor 130.

The camera 195 is configured to capture still images or moving images. The camera 195 may capture still images at a specific point in time, but may also capture still images continuously.

The camera 195 may photograph the front of the electronic apparatus 100 to photograph the area where the content is projected. The processor 130 may identify whether the area on which the content is projected is maintained during movement of the electronic apparatus 100 based on the image photographed through the camera 195, and when the area on which the content is projected changes above a preset error, may change the screen form of the content based on the photographed image.

The camera 195 includes a lens, a shutter, an aperture, a solid-state imaging device, an analog front end (AFE), and a timing generator (TG). The shutter controls the time when light reflected from a subject enters the camera 195, and the aperture controls the amount of light entering the lens by mechanically increasing or decreasing the size of the opening through which the light enters. When the light reflected from the subject is accumulated as a photoelectric charge, the solid-state imaging device outputs the photoelectric charge as an electrical signal. The TG outputs a timing signal to read out the pixel data of the solid-state imaging device and the AFE samples and digitizes the electrical signal output from the solid-state imaging device.

As described above, the electronic apparatus 100 may change the projection angle and the screen form of the content as the electronic apparatus 100 moves, thereby enhancing the user's sense of immersion by maintaining the area where the content is projected on the projection surface even if the electronic apparatus 100 moves.

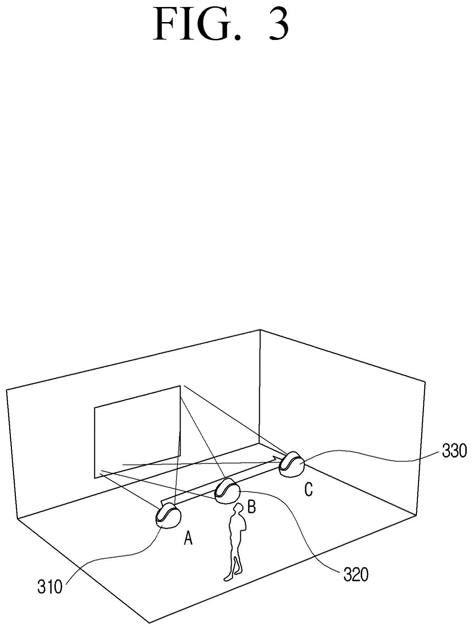

Hereinafter, the operation of the electronic apparatus 100 will be described in greater detail with reference to FIGS. 3 to 25. FIGS. 3 to 25 will describe individual embodiments for convenience of explanation. However, the individual embodiments of FIGS. 3 to 25 may be practiced in any combination.

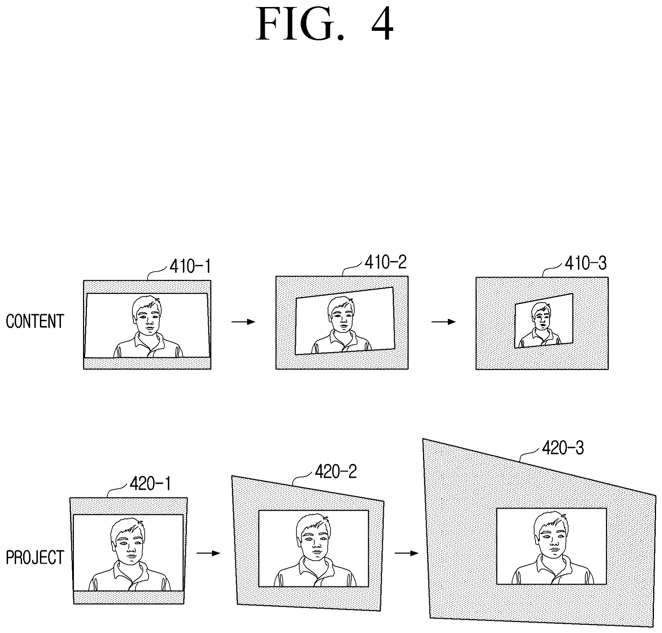

FIGS. 3 and 4 are views provided to schematically explain an operation of an electronic apparatus according to various embodiments of the disclosure.

Referring to FIGS. 3 and 4, the electronic apparatus 100 includes the driver 120, and the processor 130 may control the driver 120 to move the electronic apparatus 100 as needed. For example, the processor 130 projects content at position A 310 and then, move to position B 320 to finally move to position C 330, as shown in FIG. 3.

In this case, the processor 130 may gradually change the screen form of the content, and may control the projector 110 to project the content with the changed screen form. For example, at position A 310, the screen form of the content is unchanged as shown in 410-1, and the processor 130 controls the projector 110 to project the content onto the projection surface as shown in 420-1.

When the electronic apparatus 100 is located in position B 320, the processor 130 may change the screen form of the content as shown in 410-2, and control the projector 110 to project the content onto the projection surface as shown in 420-2.

When the electronic apparatus 100 is located in position C, the processor 130 may change the screen form of the content as shown in 410-3, and control the projector 110 to project the content onto the projection surface as shown in 420-3.

The content may change from a screen form such as 410-1 to a screen form such as 410-3, wherein each corner of the content may change in the screen form to face the center of the content. In particular, as the electronic apparatus 100 moves to the right, the degree of change in the upper left corner of the content may be greater than the degree of change in the upper right corner of the content.

The shaded portion surrounding the content in 410-1 to 410-3 may be light of an area that does not represent the content among light emitted by the projector 110. In other words, although the entire light emitted by the projector 110 in 410-1 to 410-3 may be the same, the area representing content may become smaller as the screen form of the content changes (i.e., from 410-1 to 410-3).

On the other hand, as the electronic apparatus 100 moves (i.e., from 420-1 to 420-3), the projection angle decreases and accordingly, the area corresponding to the entirety of the light emitted by the projector 110 on the projection surface may become larger. However, as the screen form of the content is gradually changed, such as from 410-1 to 410-3, the area corresponding to the content on the projection surface may be maintained consistently. Thus, the user's sense of immersion may be maintained even if the electronic apparatus 100 moves.

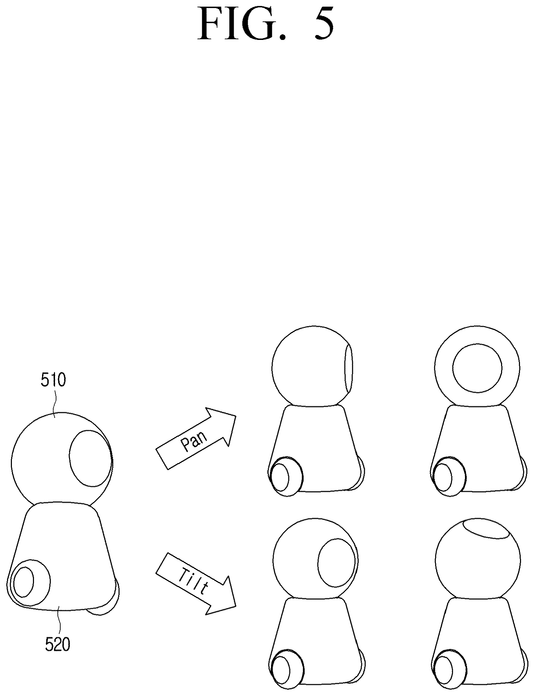

FIG. 5 is a flowchart provided to explain a structure of the electronic apparatus 100 according to an embodiment of the disclosure.

The electronic apparatus 100 may include a first body and a second body.

Referring to FIG. 5, the electronic apparatus 100 may include a first body 510 including the projector 110 and a second body 520 formed on a lower portion of the first body 510.

The first body 510 may include the projector 110 and a second driver that controls a projection direction of the projector 110, and the second body 520 may include a first driver that moves the electronic apparatus 100. The processor 130 may control the first driver to move the electronic apparatus 100 from the first position to the second position, and when the electronic apparatus 100 is in the second position, the processor 130 may control the second driver to cause the projector 110 to project the second content based on the projection angle. The second driver may be implemented to enable at least one of panning or tilting of the projector 110.

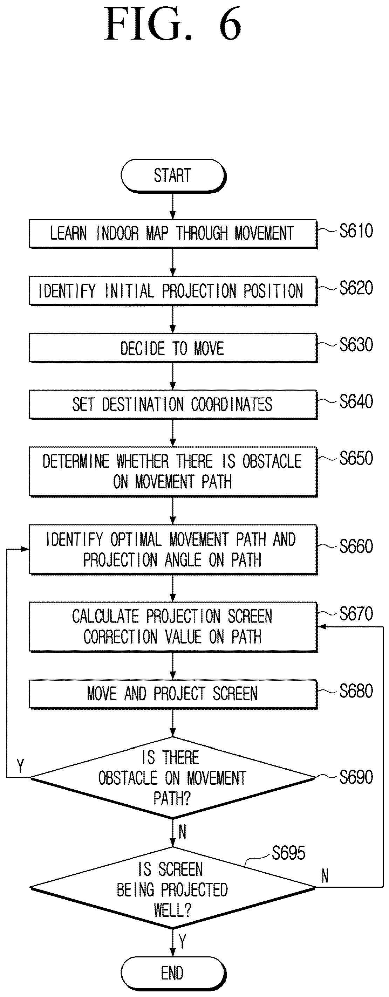

FIG. 6 is a flowchart provided to explain an operation of the electronic apparatus 100 according to an embodiment of the disclosure.

Referring to FIG. 6, the processor 130 may learn an indoor map through movement at operation S610. For example, the processor 130 controls the driver 120 to move the electronic apparatus 100, and may learn the indoor map during the movement.

The processor 130 may identify an initial projection position at operation S620. For example, when s content projection command is received, the processor 130 identifies an initial projection position based on at least one of a user's position or a projection surface. However, the disclosure is not limited thereto, and the processor 130 may also identify the initial projection position based on a user command.

While content is projected from the initial projection position, the processor 130 may determine to move the electronic apparatus 100 at operation S630. For example, while projecting content from the initial projection position, the processor 130 may determine to move the electronic apparatus 100 based on at least one of a charging state of the electronic apparatus 100, a temperature of the electronic apparatus 100, a type of content, a number of users around the electronic apparatus 100, or positions of the users.

The processor 130 may set destination coordinates corresponding to the position to move to at operation S640, and determine whether there is an obstacle on the movement path at operation S650. For example, the processor 130 identifies an edge corresponding to the movement direction of the electronic apparatus 100 among a left edge and a right edge of the projection area on which the content is projected, identify a distance from the initial projection position to the projection surface, identify a distance from the initial projection position to the identified edge based on a radial angle of the projector 110, and identify a position to move to based on the identified distance. The distance from the destination position to the identified edge may be equal to or greater than the distance from the initial projection position to the identified edge.

The processor 130 may identify an optimal movement path and a projection angle on the path at operation S660. For example, where there is no obstacle on the movement path to the destination corresponding to the position to move to, the processor 130 identifies a straight line distance as the optimal movement path, and when there is an obstacle, may identify the shortest path to the destination while avoiding the obstacle as the optimal movement path. Where there is an obstacle, the processor 130 may avoid the obstacle in such a way where the distance to the identified edge from the mobile electronic apparatus 100 increases.

The processor 130 may identify a projection angle for each position at a preset interval on the optimal movement path. The preset interval may be determined based on a computational speed of the electronic apparatus 100, a movement speed of the electronic apparatus 100, or the like.

For example, the processor 130 identifies a first projection angle at the first position based on the first position on the optimal movement path, and a second projection angle at the second position based on the second position on the optimal movement path.

The projection angle includes an azimuth and an elevation angle at each position, and the processor 130 may identify the azimuth at each position based on the distance from each position to the projection surface, the distance from the initial projection position to each position, and the movement direction of the electronic apparatus 100, and may identify the elevation angle at each position based on the distance from the initial projection position to the projection surface, the elevation angle at the initial projection position, and the azimuth at each position.

The processor 130 may calculate a projection screen correction value on the movement path at operation S670. For example, the processor 130 scales the content based on the distance from the initial projection position to the projection surface, the distance from the initial projection position to each position, the radial angle of the projector 110, and the azimuth at each position.

The processor 130 may control the projector 110 to project the screen while moving the electronic apparatus 100 at operation S680. As described above, the projection angle and the degree of scaling of the content at each position may vary.

The processor 130 may identify whether there is an obstacle during the movement operation and the projection operation at operation S690. When a new obstacle is found on the optimal movement path, the processor 130 may change the optimal movement path, and when no obstacle is found, the processor 130 may maintain the existing operation.

The processor 130 may identify whether the screen is being projected well at operation S695. For example, the processor 130 identifies a first area where content is projected on the projection surface via the camera 195 at the initial projection position, identifies a second area where content is projected on the projection surface during the process of moving to the optimal movement path and the projecting process, and identifies whether the error between the first and second areas is less than a preset error.

When the error between the first and second areas is less than the preset error, the processor 130 may maintain the existing operation, and when the error between the first and second areas is equal to or greater than the preset error, may re-perform the scaling operation of the content.

Meanwhile, hereinabove, the operation where the processor 130 learns an indoor map has been described, but the disclosure is not limited thereto. For example, the processor 130 identifies an initial projection position relative to the projection surface, identifies destination coordinates relative to the initial projection position or the projection surface based on a movement decision, and identifies a projection angle based on the destination coordinates.

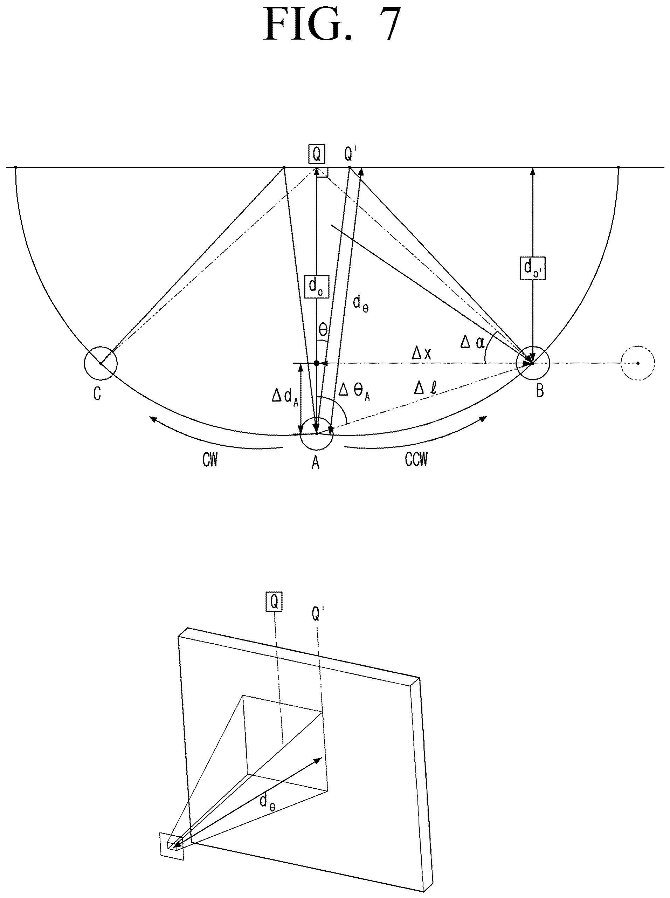

FIGS. 7 to 9 are views provided to explain an operation of identifying a position to move to and a projection angle according to various embodiments of the disclosure. For convenience of explanation, FIGS. 7 to 9 illustrate that the electronic apparatus 100 moves from first position A to second position B while projecting first content.

Referring to FIGS. 7 to 9, the processor 130 may control the projector 110 to project the first content at the first position A. In this case, the center of the horizontal axis of the projection area where the first content is projected on the projection surface may be Q, and the right edge of the projection area where the first content is projected may be Q'.

When it is identified that a repositioning is required, the processor 130 may identify which of the left edge and the right edge Q' of the projection area where the first content is projected on the projection surface corresponds to the movement direction of the electronic apparatus 100, and identify the second position B based on the identified edge. For example, when it is identified that a repositioning is required, the processor 130 identifies the right edge Q' as a reference point because the movement direction of the electronic apparatus 100 is to the right among the left edge and the right edge of the projection area where the first content is projected on the projection surface. Subsequently, the processor 130 may identify a distance $d_o$ from the first position A to the projection surface, and identifies a distance $d_\theta$ from the first position A to the right edge Q' based on the radial angle $\Theta$ of the projector 110. The processor 130 may identify the second position B where the distance from the second position B to the right edge Q' is equal to or greater than the distance from the first position A to the right edge Q'. For example, the processor 130 may identify the second position B where the distance from the second position B to the right edge Q' is equal to the distance from the first position A to the right edge Q'.

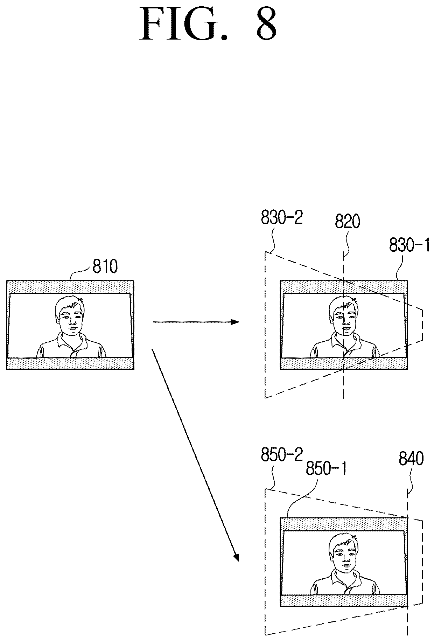

Through such an operation, the projection area can be maintained consistently even when the electronic apparatus 100 projects second content where the screen form of the first content is changed at the second position B. For example, as shown on the left side of FIG. 8, the processor 130 projects first content 810 at the first position A. As shown on the upper right side of FIG. 8, when the projection angle at the second position B is identified with reference to the center of the horizontal axis 820, Q of the projection area, the entire area where light is projected by the projector 110 on the projection surface may change from 830-1 to 830-2. In other words, the area 830-2 may not include the upper right and lower right portions of the projection area where the first content is projected as shown in the left side of FIG. 8. On the other hand, as shown in the lower right side of FIG. 8, when the projection angle at the second position B is identified with reference to the right edge 840, Q', the entire area where over which light is projected by the projector 110 on the projection surface may change from 850-1 to 850-2. In other words, the area 850-2 area may include all of the projection areas where the first content is projected, such as the left side of FIG. 8.

Referring to FIG. 7, it illustrates that the projection angle is determined with reference to the right edge Q', but the disclosure is not limited thereto. For example, the processor 130 identifies an edge corresponding to the movement direction of the electronic apparatus 100 among the left edge and right edge of the projection area where the first content is projected on the projection surface, and identifies the second position based on a point where a margin is added to the identified edge. For instance, the processor 130 may identify the right edge Q' corresponding to the movement direction of the electronic apparatus 100 among the left and right edges Q' of the projection area where the first content is projected on the projection surface, and identify he second position based on a point further to the right than the right edge Q'.

The processor 130 may also identify a margin based on the distance traveled by the electronic apparatus 100. For example, as the distance traveled by the electronic apparatus 100 increases, the entire area where light is projected by the projector 110 becomes increasingly distorted, and the projection angle also decreases. Accordingly, the processor 130 may increase the margin added to the identified edge as the moving distance of the electronic apparatus 100 increases..

Once the second position B is determined, the processor 130 may identify a projection angle at the second position B based on the second position B. The projection angle may include an azimuth at the second position B and an elevation angle at the second position B.

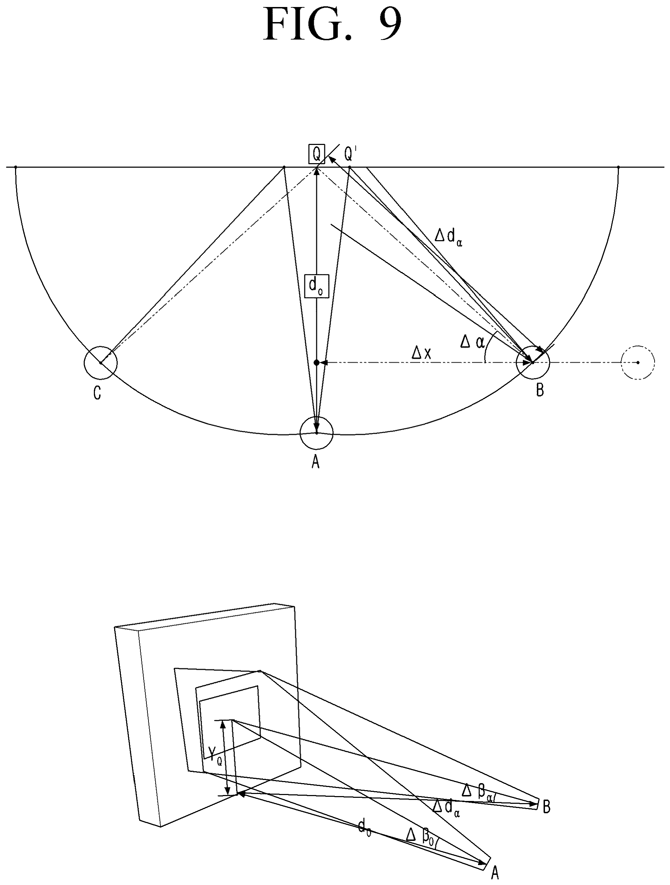

Firstly, FIG. 7 describes how to calculate an azimuth, and FIG. 9 describes how to calculate an elevation angle.

The processor 130 may identify an azimuth at the second position B $\triangle \alpha$ based on the distance from the first position A to the projection surface $d_o$, the distance from the first position A to the second position B $\triangle l$, and the movement direction of the electronic apparatus 100 $\triangle\theta_A$. The distance from the first position A to the projection surface $d_o$ may be a value obtained via the sensor 140, and the distance from the first position A to the second position B $\triangle l$ and the movement direction of the electronic apparatus 100 $\triangle \theta_A$ may be values calculated as the second position B is identified.

For example, the processor 130 obtains the azimuth at the second position B $\triangle \alpha$ via mathematical equations as follows.

$$\triangle d_A = \cos(\triangle \theta_A) \cdot \triangle l$$

$$d_0' = d_0 - \triangle d_A$$

$$\triangle x = \tan(\triangle \theta_A) \cdot \cos(\triangle \theta_A) \cdot \triangle l$$

$$\triangle \alpha = \tan^{-1}\left(\frac{d_0'}{\triangle x}\right)$$

The processor 130 may identify an elevation angle at the second position B $\triangle \beta_\alpha$ based on the distance from the first position A to the projection surface $d_o$, the elevation angle at the first position A $\triangle\beta_0$, and the azimuth at the second position B $\triangle \alpha$. The distance from the first position A to the projection surface $d_o$ may be a value obtained via the sensor 140, the elevation angle at the first position A $\triangle \beta_0$ may be a value known via the driver 120, and the azimuth at the second position B $\triangle \alpha$ may be a value obtained via FIG. 7.

For example, the processor 130 identifies the elevation angle at the second position B $\triangle \beta_\alpha$ via mathematical equations as follows.

$$\triangle d_\alpha = \frac{\triangle x}{\cos(\triangle \alpha)}$$

$$Y_Q = \tan(\triangle \beta_0) \cdot d_0$$

$$\triangle \beta_\alpha = \tan^{-1}\left(\frac{Y_Q}{\triangle d_\alpha}\right)$$

Through the above process, the processor 130 may identify the azimuth $\triangle \alpha$ and the elevation angle $\triangle \beta_\alpha$ at the second position B.

According to an embodiment, the processor 130 may identify the second position B to compute only the azimuth $\triangle \alpha$ rather than computing both the azimuth $\triangle \alpha$ and the elevation angle $\triangle \beta_\alpha$ at the second position B. In other words, the processor 130 may identify the second position B so that the elevation angle at the first position A and the azimuth at the second position B remain the same.

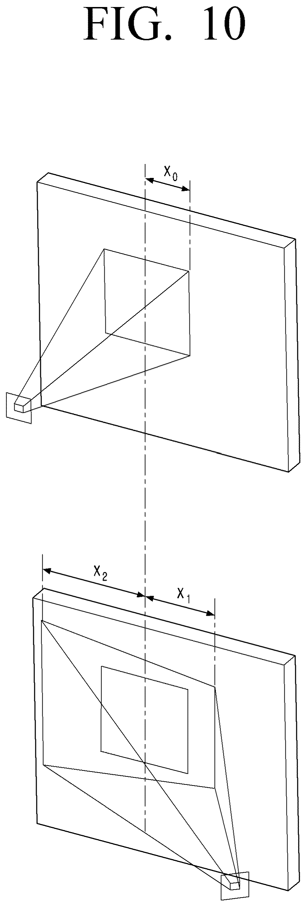

FIGS. 10 to 14 are views provided to explain an operation of changing a screen form of first content according to various embodiments of the disclosure.

For convenience of explanation, FIGS. 10 to 14 describe that the electronic apparatus 100 is moving, as described in FIG. 7.

Referring to FIG. 10, the top of FIG. 10 illustrates a first overall area where light is projected by the projector 110 on the projection surface when the electronic apparatus 100 is in the first position A, and the bottom of FIG. 10 illustrates a second overall area where light is projected by the projector 110 on the projection surface when the electronic apparatus 100 is in the second position B, where the bottom of FIG. 10 may have a larger area than the top of FIG. 10.

Describing the horizontal axis first, the distance from the center of the horizontal axis of the first overall area to the right edge is $x_0$, the distance from the center of the horizontal axis of the second overall area to the right edge is $x_1$, and the distance from the center of the horizontal axis of the second overall area to the left edge is $x_2$, where each of $x_1$ and $x_2$ can be greater than $x_0$.

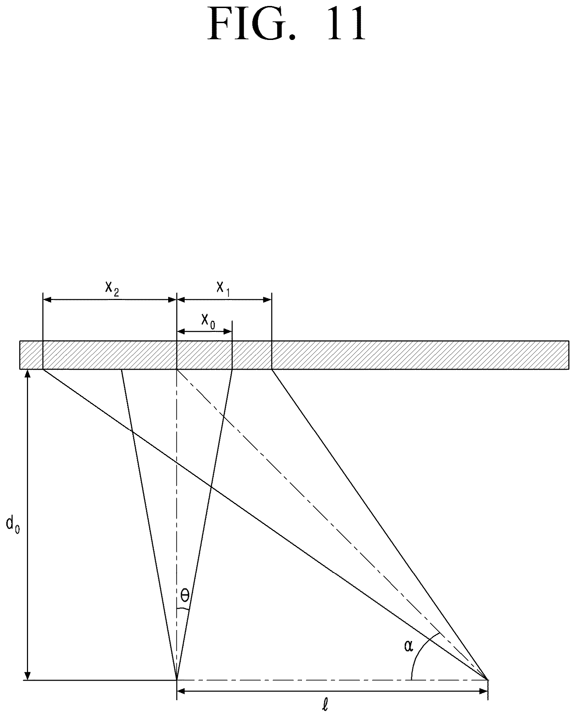

The processor 130 may change the horizontal screen form of the first content based on the ratio of each of $x_1$ and $x_2$ to $x_0$. Referring to FIG. 11, the processor 130 may obtain the ratio A and B of $x_1$ and $x_2$ to $x_0$, respectively, via mathematical equations as follows.

$$x_0 = d_0 \cdot \tan\theta$$

$$x_1 = l - \frac{d_0}{\tan(\alpha+\theta)} \qquad x_2 = \frac{d_0}{\tan(\alpha-\theta)} - l$$

$$A = \frac{x_1}{x_0} \qquad B = \frac{x_2}{x_0}$$

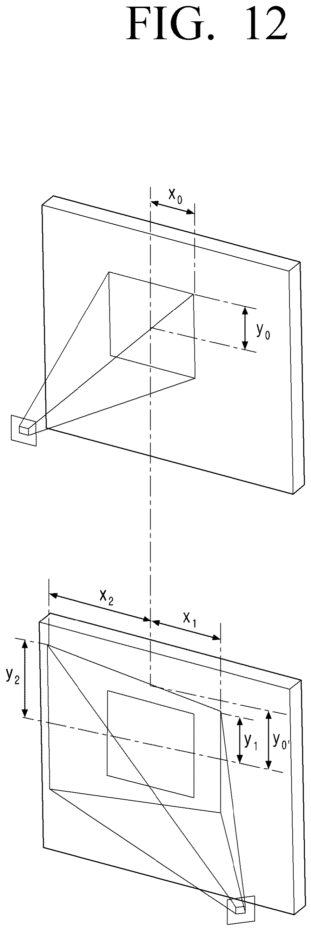

Describing the vertical axis by referring to FIG. 12, the distance from the center of the vertical axis of the first overall area to the top edge may be $y_0$, the distance from the center of the vertical axis of the second overall area to the top right edge may be $y_1$, the distance from the center of the vertical axis of the second overall area to the top left edge may be $y_2$, and the distance from the center of the vertical axis of the second overall area to the top edge may be $y_{0'}$.

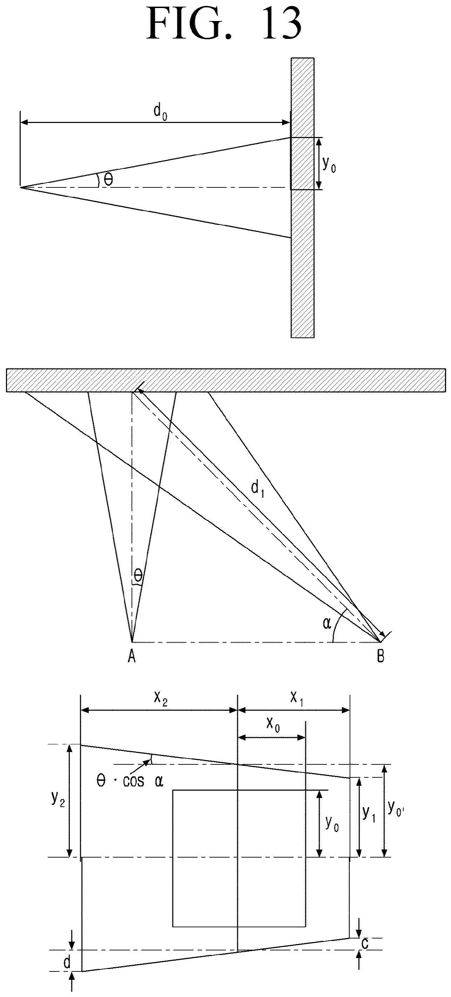

The processor 130 may change the vertical screen form of the first content based on the ratio of each of $y_1$ and $y_2$ to $y_0$. For example, referring to FIG. 13, the processor 130 obtains the ratio C and D of $y_1$ and $y_2$ to $y_0$, respectively, via the mathematical equations as follows.

$$y_0 = d_0 \cdot \tan\theta$$

$$y_0' = d_1 \cdot \tan\theta = \frac{d_0}{\sin\alpha} \cdot \tan\theta$$

$$y_1 = y_0' - c = y_0' - x_1 \cdot \tan\theta \cdot \cos\alpha = \frac{d_0}{\sin\alpha} \cdot \tan\theta - x_1 \cdot \tan\theta \cdot \cos\alpha$$

$$y_2 = \frac{d_0}{\sin\alpha} \cdot \tan\theta + x_2 \cdot \tan\theta \cdot \cos\alpha$$

$$C = \frac{y_1}{y_0} \qquad\qquad D = \frac{y_2}{y_0}$$

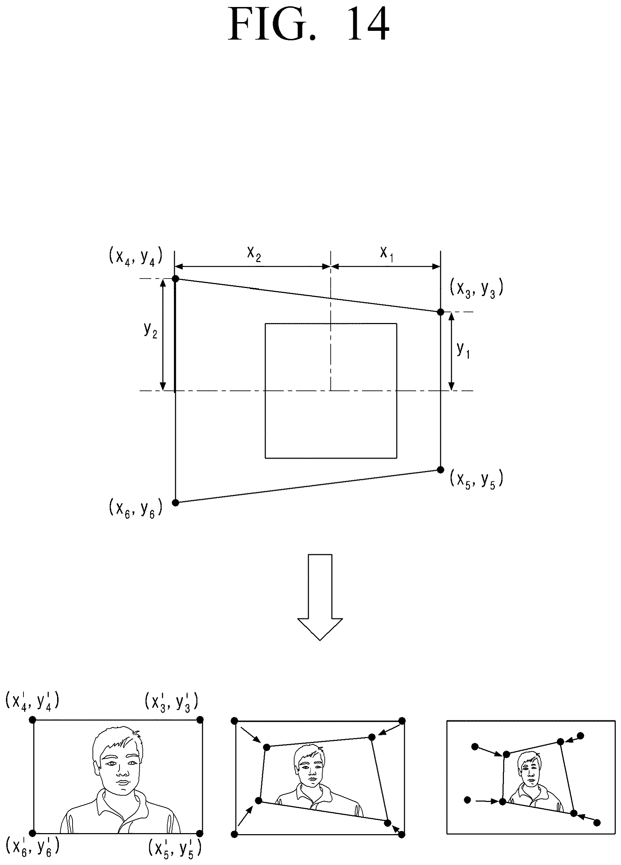

The processor 130 may obtain the second content by changing the screen form of the first content based on a plurality of ratios A, B, C, and D, as shown in FIG. 14.

However, FIGS. 10 to 14 assume that only the azimuth is changed and the elevation angle is not changed. Accordingly, when the elevation angle is changed as well as the azimuth, an additional operation is required, but the operation of correcting the azimuth and the operation of correcting the elevation angle may be distinguished. In addition, the operation for the elevation angle may be handled in a similar manner to the operation for the azimuth by rotating the coordinates. Therefore, the processor 130 may perform the method as shown in FIGS. 10 to 14 by rotating the coordinates to obtain A', B', C', and D'.

The processor 130 may obtain the second content by changing the screen form of the first content based on the plurality of first ratios A, B, C, and D associated with the azimuth and the plurality of second ratios A', B', C', and D' associated with the elevation angle.

For example, the processor 130 performs the change operation via mathematical equations as follows.

$$x_3 = x_1 \cdot D' \qquad\qquad y_3 = y_1 \cdot B'$$

$$x_4 = x_2 \cdot D' \qquad\qquad y_4 = y_2 \cdot B'$$

$$x_5 = x_1 \cdot C' \qquad\qquad y_5 = y_1 \cdot A'$$

$$x_6 = x_2 \cdot C' \qquad\qquad y_6 = y_2 \cdot A'$$

$$x_3' = \frac{x_0}{A \cdot D'} \qquad\qquad y_3' = \frac{y_0}{C \cdot B'}$$

$$x_4' = \frac{x_0}{B \cdot D'} \qquad\qquad y_4' = \frac{y_0}{D \cdot B'}$$

$$x_5' = \frac{x_0}{A \cdot C'} \qquad\qquad y_5' = \frac{y_0}{C \cdot A'}$$

$$x_6' = \frac{x_0}{B \cdot C'} \qquad\qquad y_6' = \frac{y_0}{D \cdot A'}$$

Through the above manner, the processor 130 may change the screen form of the first content in response to a change in the azimuth and the elevation angle, and the projection area where the content is projected on the projection surface may be maintained consistently.

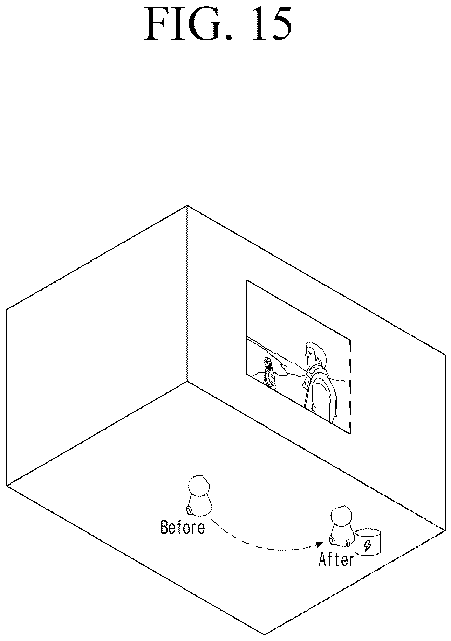

FIGS. 15 to 24 are views provided to explain a cause of movement according to various embodiments of the disclosure.

The processor 130 may identify the charging state of the electronic apparatus 100, and when it is identified that the electronic apparatus 100 needs to be charged, the processor 130 may change the position of the electronic apparatus 100.

Referring to FIG. 15, the processor 130 may identify the charging state of the electronic apparatus 100 while projecting content, and when the charging state of a battery included in the electronic apparatus 100 is less than a preset ratio, the processor 130 may control the driver 120 to move to a charging dock.

The processor 130 may identify the temperature of the electronic apparatus 100, and when the temperature of the electronic apparatus 100 rises above a preset value, change the position of the electronic apparatus 100.

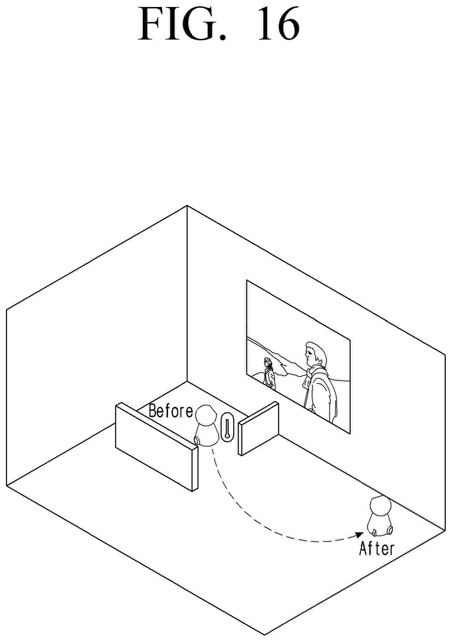

Referring to FIG. 16, the processor 130 may identify the temperature of the electronic apparatus 100 while projecting content, and when it is identified that the temperature of the electronic apparatus 100 is equal to or greater than 60°C, the processor 130 may control the driver 120 to move the electronic apparatus 100.

When moving the electronic apparatus 100 based on the temperature of the electronic apparatus 100, the processor 130 may obtain a captured image by photographing the surroundings of the electronic apparatus 100 through the camera 195, and control the driver 120 to move the electronic apparatus 100 to a relatively open area.

Alternatively, when moving the electronic apparatus 100 based on the temperature of the electronic apparatus 100, the processor 130 may identify the temperature around the electronic apparatus 100 via a thermal imaging camera, and control the driver 120 to move the electronic apparatus 100 to a position with a lower temperature.

The processor 130 may change the position of the electronic apparatus 100 based on a user in the vicinity of the electronic apparatus 100.

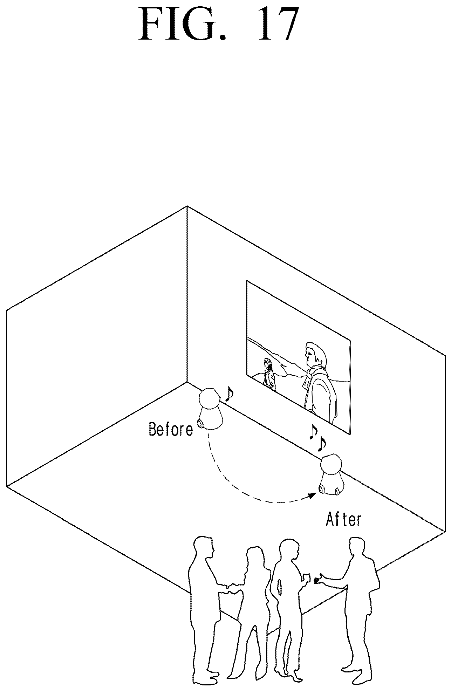

Referring to FIG. 17, the processor 130 may identify a user in the vicinity of the electronic apparatus 100, identify a projection surface based on the identified user, and control the driver 120 to move the electronic apparatus 100 to a position for projecting content onto the identified projection surface. In this case, the processor 130 may identify the user via the sensor 140, the communication interface 150, the microphone 185, the camera 195, or the like. However, the disclosure is not limited thereto, and the processor 130 may also identify at least one of a number of users or a position of users in any number of ways.

The processor 130 may control the driver 120 to move the electronic apparatus 100 based on the position of the user. For example, the processor 130 controls the driver 120 to move the electronic apparatus 100 closer to the user. Accordingly, the electronic apparatus 100 may provide higher quality sound to the user. Alternatively, the electronic apparatus 100 may identify the user's spoken voice more clearly.

When projecting content and providing sound to a user, the processor 130 may also control the driver 120 to move the electronic apparatus 100 based on the user's position.

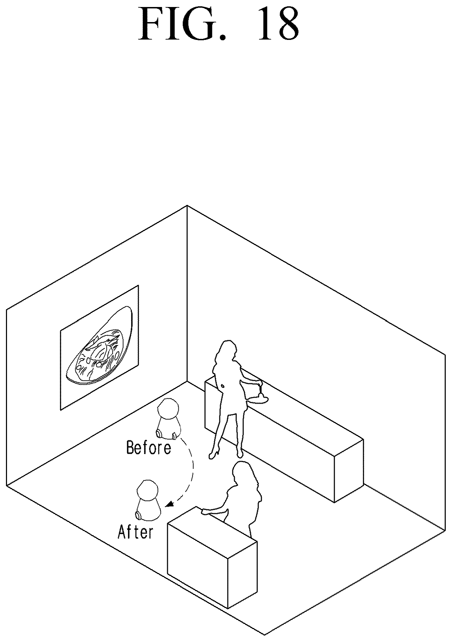

Referring to FIG. 18, when the processor 130 is projecting cooking content and providing sound instructions to a user, the processor 130 may control the driver 120 to move the electronic apparatus 100 based on a change in the user's position as the user's position changes through the cooking steps. In other words, the processor 130 may control the driver 120 to move the electronic apparatus 100 based on at least one of the type of content being output or the user's position.

The processor 130 may control the driver 120 to move the electronic apparatus 100 based on a user's context.

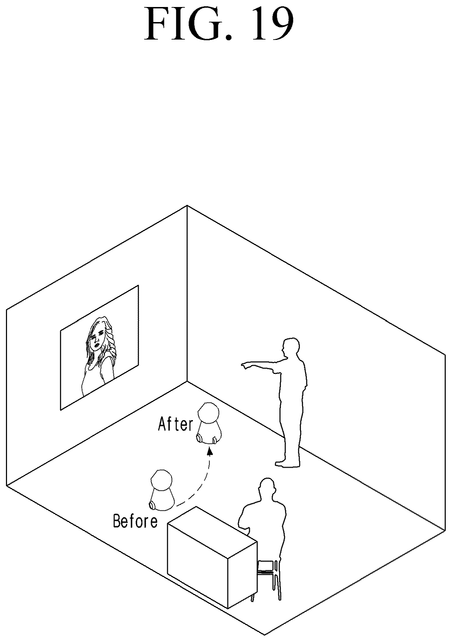

Referring to FIG. 19, the processor 130 may identify the user's context based on an operational state of at least one of the communication interface 150 or the camera 195, and when it is identified that the user's context is a preset situation, may control the driver 120 to move the electronic apparatus 100 based on the position of the user. For example, the processor 130 may photograph the user via the camera 195, and provide the photographed image to an external server, and when streaming an image from the external server and projecting the streamed image simultaneously, the processor 130 may identify that the user is currently in a video conference, and control the driver 120 to move the electronic apparatus 100 closer to the user in order to provide high-quality video and sound to the other party.

The processor 130 may also control the driver 120 to move the electronic apparatus 100 based on the type of content or the surrounding sound of the electronic apparatus 100.

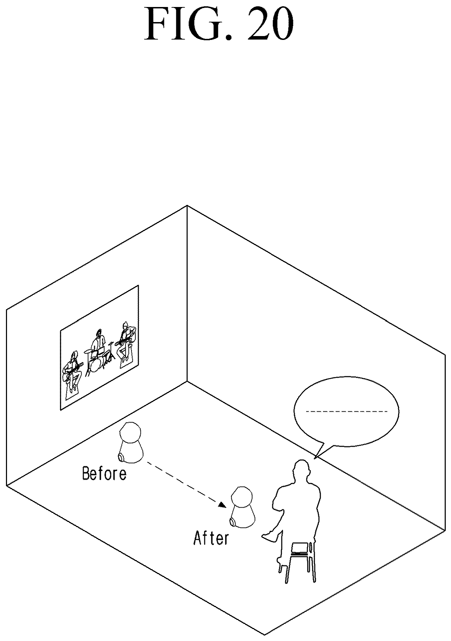

Referring to FIG. 20, when the content requires a voice command from the user, but the surroundings of the electronic apparatus 100 are noisy, the processor 130 may control the driver 120 to move the electronic apparatus 100 closer to the user.

The processor 130 may also control the driver 120 to move the electronic apparatus 100 based on at least one of the number of users or the position of the users.

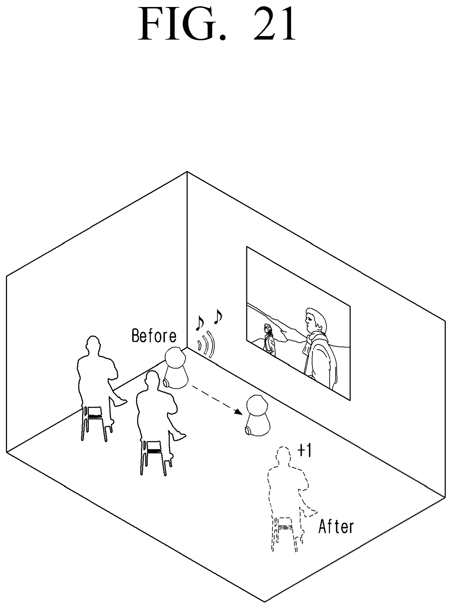

Referring to FIG. 21, when a new user is identified in the vicinity of the electronic apparatus 100, the processor 130 may control the driver 120 to move the electronic apparatus 100 to a position where it is possible to provide optimal sound for both existing and new users.

The processor 130 may also control the driver 120 to move the electronic apparatus 100 in response to a potential failure of the electronic apparatus 100.

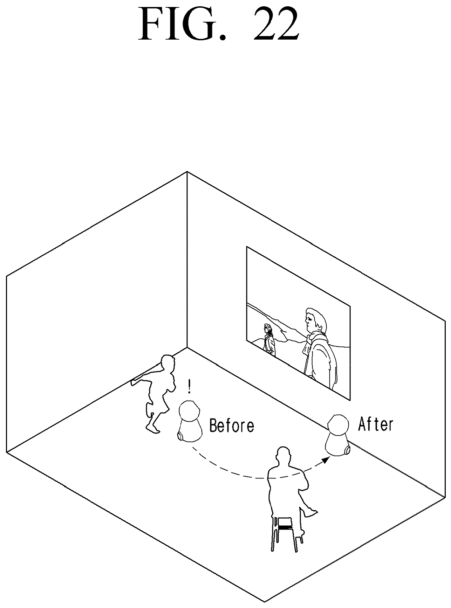

Referring to FIG. 22, when a collision with the user is anticipated, the processor 130 may control the driver 120 to move the electronic apparatus 100 to a position where a possibility of collision with the user is minimized. However, the disclosure is not limited thereto, and the processor 130 may control the driver 120 to move the electronic apparatus 100 from a position in direct sunlight to a position out of direct sunlight.

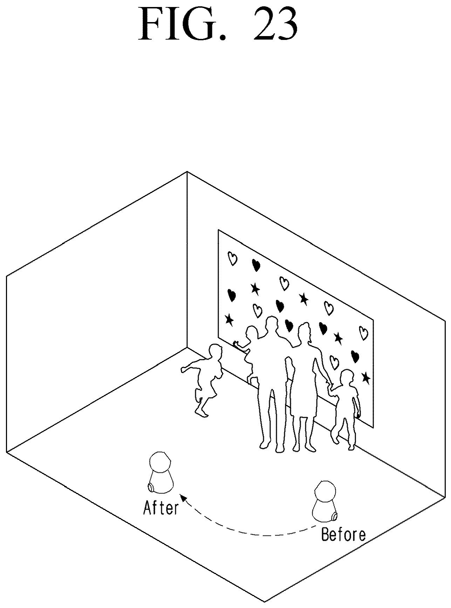

Referring to FIG. 23, the processor 130 may project a photo zone or preview, and may also control the driver 120 to move the electronic apparatus 100 based on additional identification of the user, a change in pose, or the like.

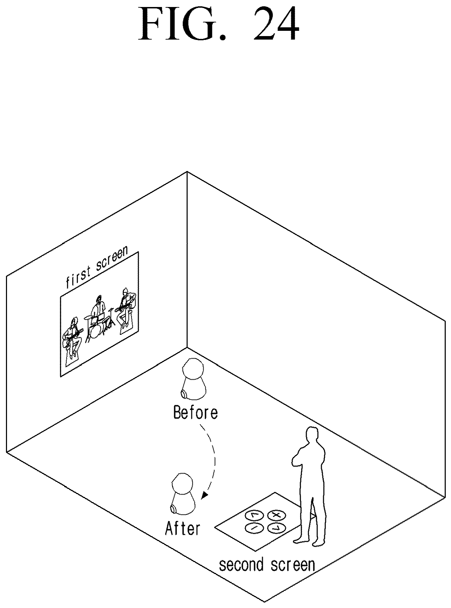

Referring to FIG. 24, the projector 110 includes a first projector and a second projector, and the processor 130 may control the first projector to project first content onto the projection surface and control the second projector to project third content onto another projection surface. The third content includes a control screen for controlling the first content, and the processor 130 may control the driver 120 to move the electronic apparatus 100 to a position where the control screen can be provided in front of the user. In other words, the processor 130 may control the driver 120 to move the electronic apparatus 100 based on the area where the third content is projected on another projection surface and the position of the user.

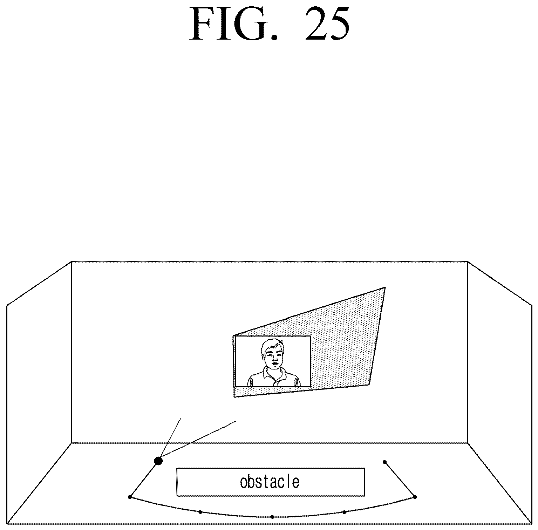

FIG. 25 is a view provided to explain a case where an obstacle is identified during a movement according to an embodiment of the disclosure.

Referring to FIG. 25, when it is identified that the electronic apparatus 100 is on the move, the processor 130 may identify the second position and an optimal movement path based on obstacles around the electronic apparatus 100. For example, when it is identified that the electronic apparatus 100 is on the move, the processor 130 may identify the second position where there are no obstacles on the movement path.

The processor 130 may identify a new obstacle while traveling from the first position to the second position. The new obstacle may be an obstacle that was not present prior to determining the second position and the optimal movement path.

When a new obstacle is identified while the electronic apparatus 100 is on the move, the processor 130 may change the movement path to a path that increases the distance from the electronic apparatus 100 to the identified edge. This is because if the movement path is changed to a path that decreases the distance from the electronic apparatus 100 to the identified edge, the overall area where light is projected by the projector 110 on the projection surface may decrease, and the projection area where the content is projected may not be maintained.

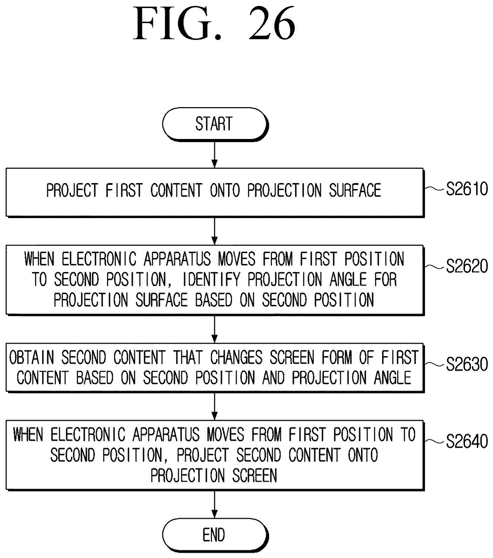

FIG. 26 is a flowchart provided to explain a controlling method of an electronic apparatus according to an embodiment.

Referring to FIG. 26, the first content is projected onto the projection surface at operation S2610. Subsequently, when the electronic apparatus is moving from the first position to the second position, a projection angle for the projection surface is identified based on the second position at operation S2620. The second content where the screen form of the first content is changed is obtained based on the second position and the projection angle at operation S2630. Subsequently, when the electronic apparatus is moving from the first position to the second position, the second content is projected onto the projection surface at operation S2640.

The method may further include identifying an edge corresponding to the movement direction of the electronic apparatus among a left edge and a right edge of the projection area where the first content is projected, and identifying the second position based on the identified edge.

The step of identifying the second position may include identifying the distance from the first position to the projection surface, identifying the distance from the first position to the identified edge based on a radial angle of the projector included in the electronic apparatus, and identifying the second position based on the identified distance.

In addition, the distance from the second position to the identified edge may be equal to or greater than the distance from the first position to the identified edge.

The projection angle includes an azimuth at the second position and an elevation angle at the second position, and the step of identifying the projection angle (S2620) may include identifying the azimuth at the second position based on the distance from the first position to the projection surface, the distance from the first position to the second position, and the movement direction of the electronic apparatus, and identifying the elevation angle at the second position based on the distance from the first position to the projection surface, the elevation angle at the first position, and the azimuth at the second position.

In addition, the step of obtaining S2630 may include scaling the second content based on the distance from the first position to the projection surface, the distance from the first position to the second position, the radial angle of the projection, and the azimuth at the second position.

The method may further include identifying a plurality of third positions on a path from the first position to the second position, and performing the operation of identifying the projection angle, the operation of changing the screen form, and the projection operation at each of the plurality of third positions.

In addition, the method may further include identifying that the electronic apparatus is moving from the first position to the second position based on at least one of a charging state of the electronic apparatus, a temperature of the electronic apparatus, a type of the first content, a number of users around the electronic apparatus, or positions of the users.

The projecting step may include controlling the first projector included in the electronic apparatus to project the first content onto the projection surface, and controlling the second projector included in the electronic apparatus to project the third content onto another projection surface.

The third content may further include a control screen for controlling the first content, and the controlling method may further include identifying the second position so that the control screen is provided in front of the user.

In addition, the area corresponding to the first content on the projection surface may overlap with the area corresponding to the second content on the projection surface by less than a preset error.

According to the above-described various embodiments, the electronic apparatus may change the projection angle and the screen form of the content as the electronic apparatus is moved, so that the area where the content is projected on the projection surface is maintained even when the electronic apparatus is moved, thereby enhancing the user's sense of immersion.

Meanwhile, according to an embodiment, the above-described various embodiments may be implemented as software including instructions stored in machine-readable storage media, which can be read by machine (e.g.: computer). The machine refers to a device that calls instructions stored in a storage medium, and can operate according to the called instructions, and the device may include an electronic apparatus according to the aforementioned embodiments (e.g.: electronic apparatus (A)). In case an instruction is executed by a processor, the processor may perform a function corresponding to the instruction by itself, or by using other components under its control. An instruction may include a code that is generated or executed by a compiler or an interpreter. The machine-readable storage medium may be provided in the form of a non-transitory storage medium. The term "non-transitory" means that the storage medium is tangible without including a signal, and does not distinguish whether data are semi-permanently or temporarily stored in the storage medium.

In addition, according to an embodiment, the above-described methods according to the various embodiments may be included and provided in a computer program product. The computer program product may be traded as a product between a seller and a purchaser. The computer program product may be distributed in the form of a storage medium (e.g., a compact disc read only memory (CD-ROM)) that may be read by the machine or online through an application store (e.g., PlayStore™). In case of the online distribution, at least a portion of the computer program product may be at least temporarily stored in a storage medium such as memory of a server of a manufacturer, a server of an application store, or a relay server or be temporarily generated.

**In** addition, according to an embodiment, the above-described various embodiments are may be implemented in a recording medium that can be read by a computer or a similar device using software, hardware, or a combination thereof. In some cases, embodiments described herein may be implemented by a processor itself. According to software implementation, embodiments such as procedures and functions described in this specification may be implemented as separate software. Each software may perform one or more functions and operations described in this disclosure.

Meanwhile, computer instructions for performing processing operations of devices according to the above-described various embodiments may be stored in a non -transitory computer-readable medium. When being executed by a processor of a specific device, the computer instructions stored in such a non-transitory computer-readable medium allows the specific device to perform processing operations in the device according to the above-described various embodiments. The non-transitory computer-readable medium refers to a medium that stores data semi-permanently and can be read by a device, rather than a medium that stores data for a short period of time, such as registers, caches, and memories. Specific examples of the non-transitory computer-readable medium may include CD, digital versatile disc (DVD), hard disk, Blu-ray disk, USB, memory card, ROM, etc.

In addition, the components (e.g., modules or programs) according to various embodiments described above may include a single entity or a plurality of entities, and some of the corresponding sub-components described above may be omitted or other sub-components may be further included in the various embodiments. Alternatively or additionally, some components (e.g., modules or programs) may be integrated into one entity and perform the same or similar functions performed by each corresponding component prior to integration. Operations performed by the modules, the programs, or the other components according to the diverse embodiments may be executed in a sequential manner, a parallel manner, an iterative manner, or a heuristic manner, or at least some of the operations may be performed in a different order or be omitted, or other operations may be added.

While the disclosure has been shown and described with reference to various embodiments thereof, it will be understood by those skilled in the art that various changes in form and details may be made therein without departing from the spirit and scope of the disclosure as defined by the appended claims and their equivalents.


**Claims**

1. An electronic apparatus comprising:

   a projector;
   a driver;

memory storing one or more computer programs; and
one or more processors communicatively coupled to the projector, the driver, and the memory,
wherein one or more computer programs include computer-executable instructions that, when executed by the one or more processors individually or collectively, cause the electronic apparatus to:

control the projector to project first content onto a projection surface,
based on the electronic apparatus moving from a first position to a second position, identify a projection angle for the projection surface based on the second position,
obtain second content by changing a screen form of the first content based on the second position and the projection angle, and
based on the electronic apparatus moving from the first position to the second position by controlling the driver, control the projector to project the second content onto the projection surface.

2. The electronic apparatus of claim 1, wherein the one or more computer programs further include computer-executable instructions that, when executed by the one or more processors individually or collectively, cause the electronic apparatus to:

identify an edge corresponding to a direction of movement of the electronic apparatus among a left edge and a right edge of a projection area onto which the first content is projected on the projection surface, and
identify the second position based on the identified edge.

3. The electronic apparatus of claim 2, further comprising:

a sensor,
wherein the one or more computer programs further include computer-executable instructions that, when executed by the one or more processors individually or collectively, cause the electronic apparatus to:

identify a distance from the first position to the projection surface through the sensor,
identify a distance from the first position to the identified edge based on a radial angle of the projector, and
identify the second position based on the identified distance.

4. The electronic apparatus of claim 3, wherein the distance from the second position to the identified edge is equal to or greater than a distance from the first position to the identified edge.

5. The electronic apparatus of claim 1,

wherein the projection angle includes an azimuth at the second position and an elevation angle at the second position, and
wherein the one or more computer programs further include computer-executable instructions that, when executed by the one or more processors individually or collectively, cause the electronic apparatus to:

identify an azimuth at the second position based on a distance from the first position to the projection surface, a distance from the first position to the second position, and a direction of movement of the electronic apparatus, and
identify an elevation angle at the second position based on a distance from the first position to the projection surface, an elevation angle at the first position, and an azimuth at the second position.

6. The electronic apparatus of claim 5, wherein the one or more computer programs further include computer-executable instructions that, when executed by the one or more processors individually or collectively, cause the electronic apparatus to:

scale the second content based on a distance from the first position to the projection surface, a distance from the first position to the second position, a radial angle of the projector, and an azimuth at the second position.

7. The electronic apparatus of claim 1,

wherein the driver comprises:

a first driver configured to move the electronic apparatus; and
a second driver configured to control a projection direction of the projector, and

wherein the one or more computer programs further include computer-executable instructions that, when executed by the one or more processors individually or collectively, cause the electronic apparatus to:

control the first driver to move the electronic apparatus from the first position to the second position, and
based on the electronic apparatus being located in the second position, control the second driver so that the projector projects the second content based on the projection angle.

8. The electronic apparatus of claim 1, wherein the one or more computer programs further include computer-executable instructions that, when executed by the one or more processors individually or collectively, cause the electronic apparatus to:

identify a plurality of third positions in a path from the first position to the second position, and
perform an operation of identifying the projection angle, an operation of changing the screen form, and a projection operation at each of the plurality of third positions.

9. The electronic apparatus of claim 1, wherein the one or more computer programs further include computer-executable instructions that, when executed by the one or more processors individually or collectively, cause the electronic apparatus to:

identify that the electronic apparatus is moving from the first position to the second position based on at least one of a charging state of the electronic apparatus, a temperature of the electronic apparatus, a type of the first content, a number of users around the electronic apparatus, or positions of the users.

10. The electronic apparatus of claim 1, wherein the projector comprises:

a first projector; and
a second projector,
wherein the one or more computer programs further include computer-executable instructions that, when executed by the one or more processors individually or collectively, cause the electronic apparatus to:

control the first projector to project the first content onto the projection surface, and
control the second projector to project third content onto another projection surface.

11. The electronic apparatus of claim 10,

wherein the third content includes a control screen for controlling the first content, and
wherein the one or more computer programs further include computer-executable instructions that, when executed by the one or more processors individually or collectively, cause the electronic apparatus to identify the second position so that the control screen is provided in front of a user.

12. The electronic apparatus of claim 1, wherein an area corresponding to the first content on the projection surface overlaps with an area corresponding to the second content by less than a preset error.

13. A method performed by an electronic apparatus, comprising:

projecting, by the electronic apparatus, first content onto a projection surface;
based on the electronic apparatus moving from a first position to a second position, identifying, by the electronic apparatus, a projection angle for the projection surface based on the second position;
obtaining, by the electronic apparatus, second content by changing a screen form of the first content based on the second position and the projection angle; and
based on the electronic apparatus moving from the first position to the second position by controlling a driver, projecting, by the electronic apparatus, the second content onto the projection surface.

14. The method of claim 13, further comprising:

identifying an edge corresponding to a direction of movement of the electronic apparatus among a left edge and a right edge of a projection area onto which the first content is projected on the projection surface; and

identifying the second position based on the identified edge.

15. The method of claim 14, wherein the identifying the second position comprises:

identifying a distance from the first position to the projection surface;
identifying a distance from the first position to the identified edge based on a radial angle of a projector included in the electronic apparatus; and
identifying the second position based on the identified distance.

# FIG. 1

100

130

110 —  PROJECTOR  ↔  PROCESSOR

120 —  DRIVER  ↔

# FIG. 2

<u>100</u>

130

| 110 | PROJECTOR | ← PROCESSOR → | MEMORY | 170 |
|-----|-----------|---------------|--------|-----|
| 120 | DRIVER | | DISPLAY | 180 |
| 140 | SENSOR | | MICROPHONE | 185 |
| 150 | COMMUNICATION INTERFACE | | SPEAKER | 190 |
| 160 | USER INTERFACE | | CAMERA | 195 |

# FIG. 3

# FIG. 4

# FIG. 5

# FIG. 6

```
                    ┌──────────┐
                    │  START   │
                    └────┬─────┘
                         ▼
        ┌──────────────────────────────────────┐
        │  LEARN INDOOR MAP THROUGH MOVEMENT    │──── S610
        └──────────────────┬───────────────────┘
                           ▼
        ┌──────────────────────────────────────┐
        │  IDENTIFY INITIAL PROJECTION POSITION │──── S620
        └──────────────────┬───────────────────┘
                           ▼
        ┌──────────────────────────────────────┐
        │           DECIDE TO MOVE             │──── S630
        └──────────────────┬───────────────────┘
                           ▼
        ┌──────────────────────────────────────┐
        │        SET DESTINATION COORDINATES   │──── S640
        └──────────────────┬───────────────────┘
                           ▼
        ┌──────────────────────────────────────┐
        │  DETERMINE WHETHER THERE IS OBSTACLE  │──── S650
        │          ON MOVEMENT PATH             │
        └──────────────────┬───────────────────┘
                           ▼
        ┌──────────────────────────────────────┐
        │  IDENTIFY OPTIMAL MOVEMENT PATH AND   │──── S660
        │       PROJECTION ANGLE ON PATH        │
        └──────────────────┬───────────────────┘
                           ▼
        ┌──────────────────────────────────────┐
        │     CALCULATE PROJECTION SCREEN       │──── S670
        │       CORRECTION VALUE ON PATH        │
        └──────────────────┬───────────────────┘
                           ▼
        ┌──────────────────────────────────────┐
        │        MOVE AND PROJECT SCREEN        │──── S680
        └──────────────────┬───────────────────┘
                           ▼
                       IS THERE
              OBSTACLE ON MOVEMENT   ──── S690
                        PATH?
                           │ N
                           ▼
                      IS SCREEN        ──── S695
                   BEING PROJECTED
                        WELL?
                           │ Y
                           ▼
                    ┌──────────┐
                    │   END    │
                    └──────────┘
```

# FIG. 7

# FIG. 8

# FIG. 9

# FIG. 10

# FIG. 11

# FIG. 12

# FIG. 13

# FIG. 14

# FIG. 15

# FIG. 16

# FIG. 17

# FIG. 18

# FIG. 19

# FIG. 20

# FIG. 21

# FIG. 22

# FIG. 23

# FIG. 24

# FIG. 25

# FIG. 26

```
                         ┌─────────┐
                         │  START  │
                         └────┬────┘
                              │
                              ▼
┌──────────────────────────────────────────────────────┐
│   PROJECT FIRST CONTENT ONTO PROJECTION SURFACE        │──S2610
└──────────────────────────┬───────────────────────────┘
                           │
                           ▼
┌──────────────────────────────────────────────────────┐
│ WHEN ELECTRONIC APPARATUS MOVES FROM FIRST POSITION    │
│ TO SECOND POSITION, IDENTIFY PROJECTION ANGLE FOR      │──S2620
│ PROJECTION SURFACE BASED ON SECOND POSITION            │
└──────────────────────────┬───────────────────────────┘
                           │
                           ▼
┌──────────────────────────────────────────────────────┐
│ OBTAIN SECOND CONTENT THAT CHANGES SCREEN FORM OF FIRST│
│ CONTENT BASED ON SECOND POSITION AND PROJECTION ANGLE  │──S2630
└──────────────────────────┬───────────────────────────┘
                           │
                           ▼
┌──────────────────────────────────────────────────────┐
│ WHEN ELECTRONIC APPARATUS MOVES FROM FIRST POSITION TO │
│ SECOND POSITION, PROJECT SECOND CONTENT ONTO           │──S2640
│ PROJECTION SCREEN                                      │
└──────────────────────────┬───────────────────────────┘
                           │
                           ▼
                      ┌─────────┐
                      │   END   │
                      └─────────┘
```

# EP 4 742 650 A1

## INTERNATIONAL SEARCH REPORT

| | International application No. |
|---|---|
| | **PCT/KR2024/012008** |

**A.    CLASSIFICATION OF SUBJECT MATTER**

**H04N 9/31**(2006.01)i

According to International Patent Classification (IPC) or to both national classification and IPC

**B.    FIELDS SEARCHED**

Minimum documentation searched (classification system followed by classification symbols)

H04N 9/31(2006.01); E03D 9/00(2006.01); G03B 21/14(2006.01); G03B 21/20(2006.01); G06F 3/048(2006.01); G09G 5/00(2006.01); H04N 5/44(2011.01); H04N 5/45(2011.01); H04N 5/74(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 투사면(projection surface), 프로젝션(projection), 컨텐츠(content), 위치(position), 투사각(projection angle), 변경(change)

**C.    DOCUMENTS CONSIDERED TO BE RELEVANT**

| Category* | Citation of document, with indication, where appropriate, of the relevant passages | Relevant to claim No. |
|---|---|---|
| Y | JP 2017-151327 A (FUJITSU LTD.) 31 August 2017 (2017-08-31)<br>    See paragraphs [0026] and [0045]-[0047]; claim 1; and figure 3. | 1-2,4,7-14 |
| A | | 3,5-6,15 |
| Y | KR 10-2022-0043454 A (DONGSHIN UNIVERSITY INDUSTRY-ACADEMY COOPERATION et al.) 05 April 2022 (2022-04-05)<br>    See paragraphs [0014] and [0016]. | 1-2,4,7-14 |
| Y | KR 10-2023-0065509 A (SAMSUNG ELECTRONICS CO., LTD.) 12 May 2023 (2023-05-12)<br>    See paragraph [0313]; claim 12; and figures 32-33. | 2,4,14 |
| Y | KR 10-2012-0134412 A (SAMSUNG ELECTRONICS CO., LTD.) 12 December 2012 (2012-12-12)<br>    See claims 1-4. | 10-11 |

| ✓ Further documents are listed in the continuation of Box C. | ✓ See patent family annex. |
|---|---|

|  | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 November 2024** | **14 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/012008** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2018-125689 A (KIMURA CORPORATION et al.) 09 August 2018 (2018-08-09)<br>See paragraphs [0007]-[0018]; and claims 1-5. | 1-15 |

**INTERNATIONAL SEARCH REPORT**
Information on patent family members

International application No.

**PCT/KR2024/012008**

| Patent document cited in search report | | | Publication date (day/month/year) | Patent family member(s) | | | Publication date (day/month/year) |
|---|---|---|---|---|---|---|---|
| JP | 2017-151327 | A | 31 August 2017 | None | | | |
| KR | 10-2022-0043454 | A | 05 April 2022 | None | | | |
| KR | 10-2023-0065509 | A | 12 May 2023 | US | 2024-0259538 | A1 | 01 August 2024 |
| | | | | WO | 2023-080421 | A1 | 11 May 2023 |
| KR | 10-2012-0134412 | A | 12 December 2012 | CN | 102811329 | A | 05 December 2012 |
| | | | | EP | 2530929 | A2 | 05 December 2012 |
| | | | | US | 2012-0307125 | A1 | 06 December 2012 |
| | | | | US | 8804053 | B2 | 12 August 2014 |
| JP | 2018-125689 | A | 09 August 2018 | CN | 110235440 | A | 13 September 2019 |
| | | | | CN | 110235440 | B | 23 August 2022 |
| | | | | JP | 7032752 | B2 | 09 March 2022 |
| | | | | US | 2019-0392739 | A1 | 26 December 2019 |
| | | | | WO | 2018-143301 | A1 | 09 August 2018 |

Form PCT/ISA/210 (patent family annex) (July 2022)